# EUROPEAN PATENT APPLICATION

(11) **EP 2 677 740 A1**
(43) Date of publication of application: **25.12.2013**
(21) Application number: 12172586.5
(22) Date of filing: 19.06.2012
(51) Int. Cl.: H04N 5/357, H02M 3/07

(54) **A method and a corresponding system for noise reduction in electronic charge pump designs**

(71) Applicant: poLight AS, 3192 Horten (NO)
(72) Inventor: Svortdal, Tore, 3182 Horten (NO)
(74) Representative: Plougmann & Vingtoft A/S

(57) **Abstract**

The present invention relates to method and corresponding system for noise reduction in a Direct Current to Direct current converter (DC), and especially to a method and system for electronic noise reduction in an electric drive circuit for capacitive loads utilizing a charge pump.

## Description

### FIELD OF THE INVENTION

The present invention relates to a method and corresponding system for noise reduction in a Direct Current to Direct current converter (DC), and especially to a method and system for electronic noise reduction in an electric drive circuit for capacitive loads utilizing a charge pump.

### BACKGROUND OF THE INVENTION

In modern electronic industry and engineering it is very popular to use DC to DC converters when different supply voltages in an electronic circuit are needed. For example, standard digital circuits may operate on +5V or +3V supply systems while analogue electronics perhaps must be supplied with ±30V supplies. When using DC to DC converters it is possible just to use a few main supplies or just one main supply, and convert this main supply output voltage(s) to other voltage levels with DC to DC converters, thereby providing all the voltage levels needed in the present electronic circuit design.

The main principle of a charge pump design is to use at least one fixed frequency oscillator signal that switches different capacitors in and out of a network of capacitors. The capacitive voltage increase is achieved by the periodic switching of the capacitors. For example, first a reservoir capacitor will be switched to be in contact with a voltage source and then to be in contact with an output terminal in a way that produces a different voltage level on the output terminal. The charging by the switching operation in an out of the reservoir capacitor has given the name to this design- a charge pump design. However, the switching frequency may be present as a ripple signal on the output voltage signal from a charge pump and/or provide unwanted cross talk in a circuit as known to a person skilled in the art. Therefore, noise reduction techniques like filters and decoupling are usually applied in circuit designs using charge pumps as voltage sources.

One class of integrated circuits that often rely heavily on DC to DC converters are the so called MEMS ASIC designs. The term MEMS is a short hand notation for Micro Electro Mechanical Systems and ASIC stands for Application Specific Integrated Circuits.

An example of a specific MEMS ASIC application is an autofocus system in a camera. The patent EP 2115500 with the title "Flexible lens assembly with variable focal length" disclose a lens assembly comprising a flexible lens body 10 inside a cavity bounded by a sidewall 11 and a first transparent cover 13, and a second transparent cover 14, wherein both covers 13, 14 are in contact with respective opposite located surfaces of the lens body 10. Piezo electric elements 12 shapes the lens body 10 when activated, thereby adjusting the focal length of the lens assembly. Embodiments of the flexible lens assembly of the patent EP 2115500 is sold under the trade name TLens™. An example of embodiment is a TLens™ chip as disclosed on the web page http://www.polight.com/tlens-13.html.

The European patent application EP 12168090 disclose an example of an electric driver circuit comprising a charge pump design being suitable to drive a TLens™ autofocus system and also an Optical Image Stabilisation (OIS) system, or more general, capacitive loads. This example of circuit design is suitable for integration into MEMS ASIC designs, for example into a camera module with a TLens™ autofocus system and/or an OIS system for use in mobile phones or other types of handheld systems.

There are some examples of different noise reduction techniques in prior art that can be effective for voltage converters using charge pump technology, as known to a person skilled in the art. However, designing electronic consumer products, for example an image sensor in a camera module, will be sensitive to electrical noise generated on analog power supplies which can affect image quality for example, and therefore it is necessary to provide noise reduction if for example a common power supply is used in the design. At the same time, it is very attractive to connect for example a TLens™ MEMS ASIC as referenced above to a common power supply used by the image acquisition circuitry because this simplifies the camera module design significantly. This solution is especially attractive in lowcost camera systems. But sharing the power supply with the image sensor introduces the noise problem, since the TLens™ MEMS ASIC comprises a (charge pump) Direct Current to Direct Current (DC) converter. However, introducing a prior art noise reduction circuitry may not be a straight forward issue. This can add extra cost and complexity to manufacturing of the system. For example, consumer products like mobile phones are being manufactured in a number of millions, and therefore the cost of each respective electronic component is a design issue. A cost saving of for example one dollar pr. produced unit means a lot of possible extra money for the manufacturer. Therefore, it is a demand and a need for innovative electronic circuit solutions that are cheap or at least cheaper to produce. Therefore, adding an extra power supply in a camera module in a mobile phone, supplying power to an image sensor acquisition circuitry, to avoid the noise problem, as discussed above, is probably too costly. However, using a common main supply like the electric driver circuit referenced above would require adding extra circuitry to provide noise reduction. This can also be too costly for many types of applications like mobile phones.

According to an aspect of the present invention, the above mentioned noise problem associated with charge pumps may be reduced by applying a method and corresponding system providing a control of the charge pump switching signal as a function of an activity modus of other electronic functions being sensitive to analogue noise on power rails, for example the activity modus can be related to status of an image sensor acquisition sampling signal and/or read out signal.

Hence, an improved noise reduction in a charge pump design would be advantageous, and in particular a more efficient and/or simpler method and system providing noise reduction in a Direct Current to Direct Current (DC) converter applied in a MEMS ASIC camera module would be advantageous.

### OBJECT OF THE INVENTION

It is a further object of the present invention to provide an alternative to the prior art.

In particular, it may be seen as an object of the present invention to provide a method for noise reduction and a corresponding system comprising a charge pump power source that solves the above mentioned problems of the prior art by correlating activity in the charge pump and activity in a connected apparatus, thereby enabling a control of noise generating activity in the charge pump, thereby eliminating noise in periods related to noise sensitive activity in the attached apparatus.

### SUMMARY OF THE INVENTION

Thus, the above described object and several other objects are intended to be obtained in a first aspect of the invention by providing a system providing a monitoring of activity in a connected apparatus and, based on this monitoring, enabling or respectively disabling a charge pump activity.

The invention is particularly, but not exclusively, advantageous for obtaining noise reduction in apparatus comprising auto focus functionality and/or optical image stabilization functionality.

Respective aspects of the present invention may each be combined with any of the other aspects. These and other aspects of the invention will be apparent from and elucidated with reference to the embodiments described hereinafter.

### BRIEF DESCRIPTION OF THE FIGURES

The method and corresponding system according to the present invention will now be described in more detail with reference to the accompanying figures. The attached figures illustrates an example of embodiment of the present invention and is not to be construed as being limiting to other possible embodiments falling within the scope of the attached claim set.
Figure 1 illustrates an example of a camera system.
Figure 2A illustrates an example of an autofocus lens system.
Figure 2B illustrates an example of an electric equivalent circuit of the autofocus system in figure 2A.
Figure 3 illustrates timeslots in an example of method according to the present invention.
Figure 4 illustrates timeslots in another example of method according to the present invention.
Figure 5 illustrates timeslots in another example of method according to the present invention.
Figure 6 illustrates timeslots in another example of method according to the present invention.
Figure 7 illustrates timeslots in another example of method according to the present invention.

### DETAILED DESCRIPTION OF AN EMBODIMENT

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

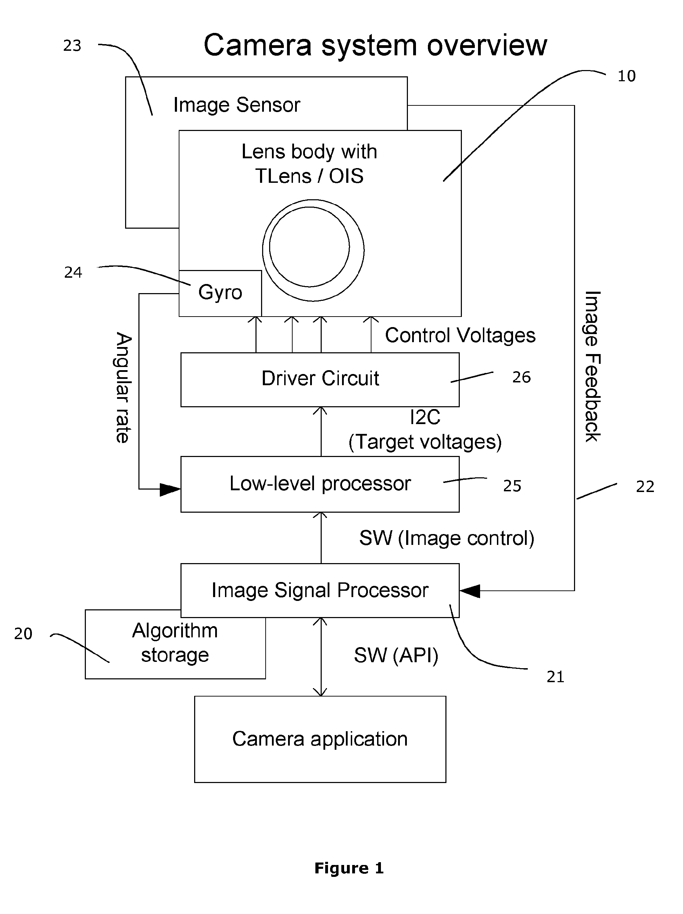

Figure 1 illustrates an example of a camera system comprising an auto focus system and an Optical Image Stabilization (OIS) system. An example of an OIS system is disclosed in the European patent application EP 08712670.

The illustrated camera system uses a TLens™ 10, and the functionality of these functions are described in detail in the references given above. An electric drive circuit as disclosed in the European patent application EP 12168090 is advantageously used in this example of a camera module, wherein the electric drive circuit output is used to drive capacitive loads like piezo electric actuators to achieve both image stabilization and auto focus adjustments as described in the referenced patents and patent applications. When using an example of a method and system according to the present invention image acquisition circuitry may use the same analogue voltage rail as the other functional units, i.e. the TLens™ and/or the OIS system thereby simplifying the camera module significantly.

With reference to figure 1, a functional layout of a camera module is illustrated. The algorithm storage 20 provide the processor code or program instructions driving the image processing and respective image processor functions when executed in the connected Image Signal Processor 21, as known to a person skilled in the art. Based on an image feedback 22 from an image sensor 23, it is possible to identify for example a focus point. A gyro 24 may provide signals indicating unintended movements of the camera, for example shaking of a hand holding a camera with the image sensor. Different algorithms executed as instructions in the Image Signal Processor 21 provides digital number representations of voltages that are to be applied onto actuators in the auto focus lens system and/or the OIS system for example, thereby achieving a setting of OIS and/or focus. The communication of digital voltage representations to/from the auto focus system or the image stabilization (OIS) system requires respectively Analogue to Digital Converters (ADC) and Digital to Analog Converters (DAC). Such units are integrated into the system disclosed in figure 1 but are not shown. In figure 1, the low-level processor 25 and/or the driver circuit 26 may comprise these functional units.

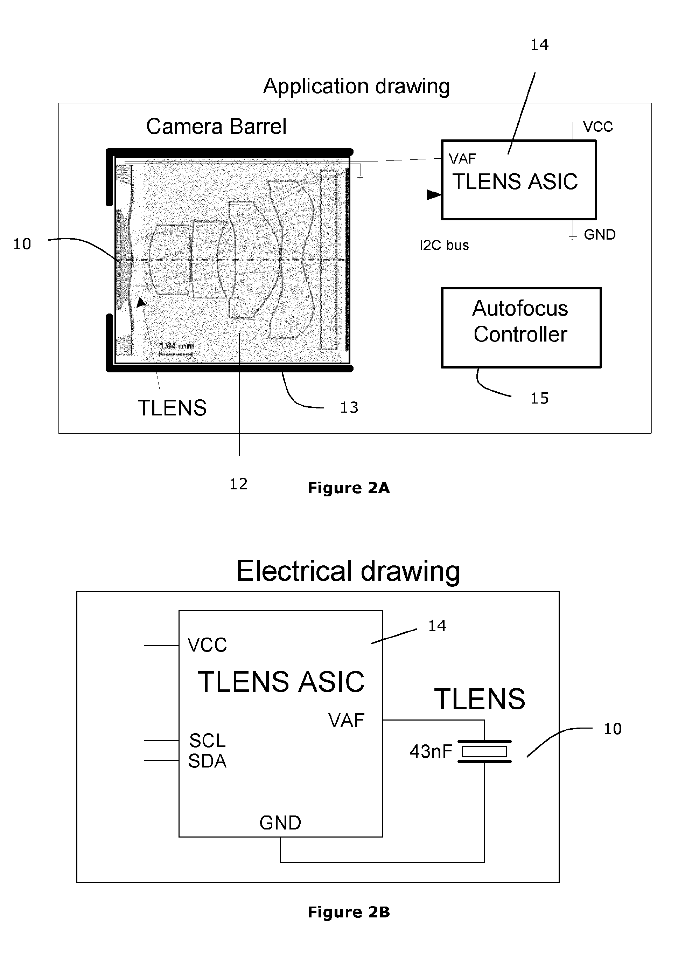

Figure 2A illustrates a TLens™ 10 as part of a stack of fixed focus lenses 12 inside a camera barrel 13. The TLens™ 10 is a capacitive load for the TLens™ ASIC 14. Electrically, the TLens™ 10 may be viewed as a capacitor between 10nF to 100nF with a certain limited leakage current. The electric equivalent circuit is illustrated in figure 2B. An autofocus controller 15 (or an Image Signal Processor 21) may direct instructions like start or stop of the switching signal of the charge pump, i.e. start or stop of the charge pump, set a target voltage for an actuator in the TLens™ 10 etc. via an I2C signal bus to the TLens™ ASIC 14. The image acquisition circuitry may communicate image data to the Image Signal Processor 21 illustrated in figure 1. The TLens™ ASIC 14 is not the only driver circuit that can utilize a system and method according to the present invention. Any driver circuit with a charge pump may benefit from the principles of the present invention.

As illustrated in figure 2B, an example of embodiment using a TLens™ 10 receives a voltage VAF (Voltage Auto Focus) that has a voltage level defined by for example an auto focus algorithm being executed in the autofocus controller 15. Although only one signal line is indicated in figure 2B, a plurality of signal lines may be used when there is a plurality of piezo electric actuators present in the TLens™ 10, for example as in examples of auto focus and OIS circuitry.

The problem with noise in the image sensor acquisition circuitry is well known in prior art. In some mobile phone cameras it is usual to use a Voice Coil Motor (VCM) to move a lens member back and forth, inside a camera barrel for example, thereby adjusting the focus of the camera. The noise generated from the DC-DC converter can be filtered at for example the ASIC or driver circuit power supply VCC, or the TLens™ ASIC 14 can be supplied from a separate voltage rail, as is the case in most VCM implementations. However, this solution requires an extra signal pin on the camera module, and extra components like resistors/inductors/capacitors etc. providing noise reduction in the system. The extra signal pin will increase the area used by the ASIC dice and printed circuit board, and for example inductors are known to be expensive components.

According to an aspect of the present invention, to be able to minimize the generated noise on the power supply rail, the TLens™ ASIC 14 or a driver circuit for example may have a low-noise mode. When low-noise mode is active (for example activated by a control signal), the charge pump is stopped. During this period, until the low-noise mode is turned off, the TLens™ 10 voltage or capacitive load voltage is kept constant with the help of the charge present at a reservoir capacitor in the charge pump itself, as disclosed in the European patent application EP 12168090, but also by charge stored in a connected capacitive load, i.e. the TLens™ or OIS system or generally, capacitive loads themself.

When the low-noise mode is active, the noise generated by for example the TLENS ASIC 14 or another driver circuit is negligible, and the noise sensitive pixel-acquisition circuits in an image sensor for example will not be affected in a way that will degrade image quality. Entry into this mode is synchronized with the activity in the example of image sensor, thereby the charge pump is switched on and off in time slots defined by a status of activity and/or acquisition type in the imaging system. For example if it is video recording, still picture capture with variable exposure time, multiple autofocus settings within a motive to be photographed etc.

However, there is a limit to a length of the time slot when the charge pump is turned off. In this situation the charge pump output voltage may drop, thereby altering the auto focus setting, for example. Therefore, it is within the scope of the present invention to allow different settings of time slot lengths.

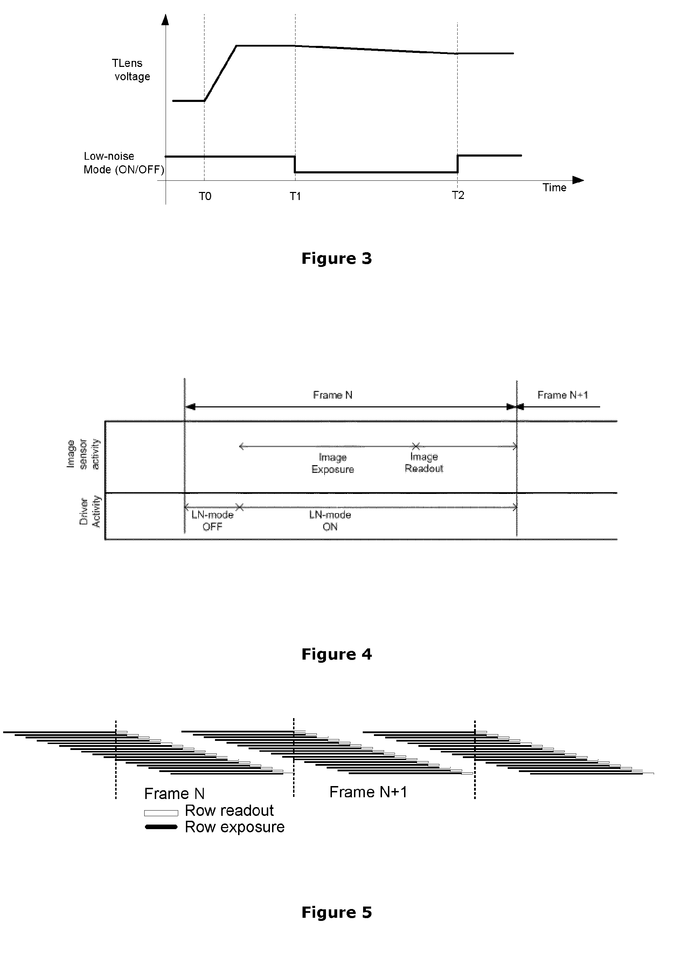

An example of embodiment of the present invention suitable for being used with an image sensor and corresponding acquisition circuit, distinguish between auto focus adjustments and image sensor integration time. With reference to figure 3, the TLens™ 10 voltage for example, i.e. a target voltage to be applied on an actuator or more generally a capacitive load, starts to rise during the time interval To to T₁. At T₁ the target voltage level has settled. During this time interval it is required that the charge pump is working to provide the target voltage level. This does not alter the image acquisition at all since the Image Signal Processor 21 or an autofocus 15 controller or similar controller will not enable read out of an image before the auto focus settling is finished. T₂ indicates when an image acquisition and image read out terminates.

Generally, there will always be a time interval related to the time that is required to charge a capacitive load to reach a defined target voltage level. Further, there will always be a time interval wherein a functional unit utilizing the settled target voltage level needs to be able to complete a function associated with this functional unit, and at last there may be a time interval related to resetting circuitry before any new use of the circuitry may take place. For example, in an image sensor it is often required that image pixels are reset before a new image may be acquired.

Figure 4 illustrate a more generic relationship between respective events of driving capacitive loads and operating functional units coordinated within a noise reduction scheme according to the present invention. The illustration use an image sensor as an example of functional unit and a TLens™ as an example of a capacitive load. The activity over time of the settling or adjustment of a capacitive load or loads and time used by a functional unit utilizing the capacitive load or loads is denoted as a Frame. The illustration depicts Frame N and a next Frame N+1. In some applications the length of a Frame N can be variable or of a fixed length. The individual time slots given by the length of Frame N and Frame N+1 can be the same or different.

According to an aspect of the present invention there may be different ways of generating and/or defining time slots as detailed above. For example, it is possible to have event driven timeslots, i.e. start and stop of a time slot is generated by detectable events related to the properties expected to take place in the time slot. For example, the TLens ASIC™ 14 as disclosed in the EP application EP 12168090 comprises a voltage monitor that is part of a feedback loop to control the charging of a capacitive load, i.e. when the voltage across the capacitive load has reached the target voltage level. In an example of embodiment of the present invention, this event can be signalled across the I2C bus for example to a processor running instructions providing an example of embodiment of the present invention. In this manner it is possible to have a real time identification of T₁ as disclosed in figure 3. The starting point To can be related to activation of a shutter function in a camera, i.e. pushing of a button. If the activity is a video recording a series of Frames will be recorded wherein the Frame rate will be dictated by the video recording speed. The last event at T₂ may be a function of image sensor architecture, i.e. if the read out is based on pixel by pixel read out or by row or column of the pixel matrix, or if it is possible to read out sub images from the image processor, and for example resetting time of pixels. In addition it is possible with variable exposure time due to variable light conditions around a camera. In some image sensor architectures there can be a "ready" status that can be used to trigger a read out sequence. If the read out time is known, a corresponding delay of the "ready" signal could then be used to define T₂ as indicated in figure 3.

Another example of embodiment according to the present invention comprises different timer registers that can be user defined to set start and stop of the different time slots described above. This manner of implementing an embodiment makes it possible to take into account other design issues. For example, the availability of signals defining events as described above may be limited or may require a substantial redesign of other system components. Further, using timer register makes it possible to adjust the low-noise method according to the present invention to many other design issues, and the implementation within an ASIC is straight forward. There is also an issue related to how long a capacitive load can be maintained without the charge pump is running. An embodiment comprising timer registers makes it possible to implement different noise reduction schemes taking into account physical properties of the capacitive load.

In an example of embodiment the low-noise mode is controlled by for example on-chip timer registers LN_START (Low-Noise_START), LN_END (Low-Noise_END), LN_CTR (Low-Noise_CounTeR) and a control register LN_CTRL (Low-Noise_ConTRoL) which may be implemented in the TLENS™ MEMS ASIC 14 referenced above. A detailed description is disclosed below. These examples of registers can also be located inside an auto focus controller, or it is also possible to utilize general purpose registers located inside a general purpose Image Signal Processor 21, or processor like a micro controller. When an end of a low-noise period occurs the signaling of LN_END > LN_START may be initiated and the low-noise mode may be entered automatically after a DAC write access, i.e. when a digital representation of a target voltage level is transferred to a DAC circuitry converting the target voltage level to an analogue signal level. In the context described above, this can be viewed as an event triggering a low-noise sequence. This allows the charge pump to be operative while the TLens™ voltage(s) is changing, and entering a low-noise mode after a user-defined time slot length being set in the LN_START timer register, thereby allowing the image sensor a noise-free pixel integration time after the LN_START timer has finished counting. In figure 4 it is illustrated the functional relationship of the low-noise mode according to the present invention between the driving of the TLens™ and image sensor activity on a picture frame time slot basis.

The method and system according the present invention of the low-noise mode is to keep the voltage of for example the TLens™ 10 equivalent capacitor within specified limits (or accuracy) while avoiding charge-pump related switching noise during image exposure and read-out, and drawing a minimum amount of current from the reservoir capacitor.

An auto focus (AF) controller may load appropriate values into LN_START, LN_END, and the LN_CTRL registers, thereby enabling the low-noise sequence to start automatically when for example the DAC register is accessed. This can be achieved by arranging a logical AND function between the output signal from the LN_START register and a write signal used to clock or latch digital data into the DAC circuitry.

Typically, the LN_CTR register keeps track of the current execution step an example of embodiment of the noise reduction systemnoise reduction system according to the present invention has during the execution of the low-noise sequence. This register may be read by the noise reduction system if desired.

In an example of embodiment the following functionality is assigned to the above disclosed registers:

### LN_CTR:

This register is a counter keeping track of image phases, and is synchronized to the image acquisition by the noise reduction system, for example by writing a new target value into the DAC circuitry at a specific phase of the image acquisition cycle.. At the end of a noise reduction cycle for example, this register will remain at LN_END value until a next one of a most significant byte of data is written to a corresponding DAC circuitry. The Most Significant Byte (MSB) is used in this example since a Least Significant Byte (LSB) is transferred first and therefore the most significant byte indicates the end of the data writing cycle for the DAC circuitry. In other examples of embodiment an opposite sequence may be used. When the low noise-mode is disabled, this counter remains at zero.

### LN_START

This timer register enables when to enter a low-noise mode after a DAC write access event, for example.

### LN_END

This timer register enables when to leave a low-noise mode after a DAC write access, for example. Any value smaller than or equal to LN_START should disable Low-noise mode.

### LN_CTRL

Control register containing bits for enabling the low-noise feature, and in addition, control bits that can force respectively the low-noise mode on or off regardless of counter registers.

With reference to the example depicted in figure 3:

### T₀: Start of sequence.

The controller loads the next auto focus target value (VAF) into the DAC register. This starts the LN_CTR. At this point, the voltage converter (charge pump) is running, and an output amplifier is starting to move towards the target value.

### T₁: LN_CTR > LN_START

An example of embodiment of the noise reduction system according to the present invention enters low-noise mode, based on the current value of LN_CTR compared to the LN_START register. The charge pump is switched off, and no switching noise is emitted.. The capacitive load (TLens ™) voltage may drop slightly during this time period, as long as the voltage stays within the depth of field of for example the selected focus value. A conservative value for the allowed voltage drop is about 5% of the full-scale value.

### T₂: LN_CTR > LN_END

An example of embodiment of the noise reduction system according to the present invention may leave the low-noise mode, allowing the charge on a capacitive load (TLens™) and reservoir capacitor to be replenished.

### Low-Noise FORCE_ON

A low-noise mode can also be forced via a LowNoiseForce bit in the LN_CTRL register. When this bit is set logically to one for example, low-noise mode is entered regardless of values in the control registers.

### Low-Noise FORCE_OFF

A low-noise mode can also be forced off via a LowNoiseForce bit in the LN_CTRL register. When this bit is set logically to one for example, low-noise mode is turned off or is disabled regardless of values in the control registers.

In some examples of embodiment, the off status overrides the on status.

### Example 1: an example of a low-noise mode with reference to figure 4.

In this example a camera operates in a frame by frame mode, and the low-noise registers are written so that low-noise mode is entered at the start of image exposure. The target auto focus voltage value is written into a DAC circuitry at the frame start, and the delay counter is set so that a low-noise mode is entered when the image exposure starts, and stays active until the image readout is terminated.

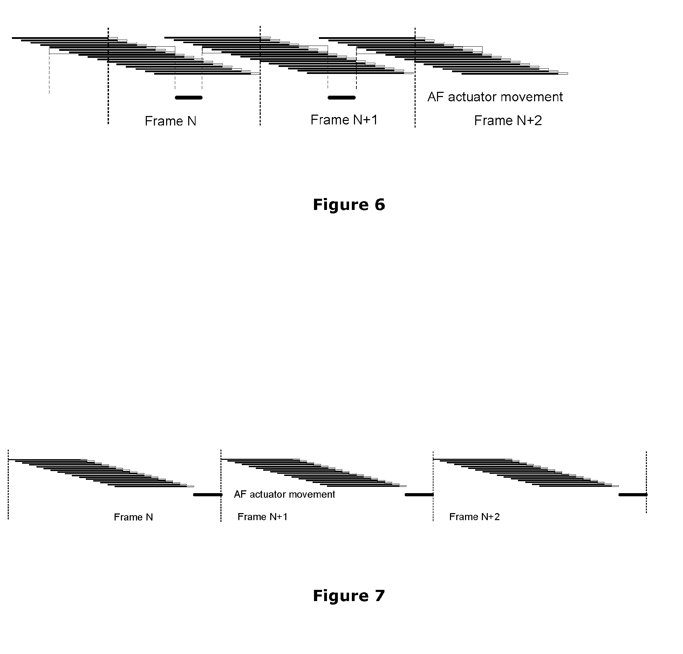

### Example 2: an example of a low-noise mode with reference to figure 5 and 6.

This example of a low-noise mode can be encountered in a preview mode of a camera, and when the auto focus sequence is running.

In the example illustrated in Figure 5, the image acquisition is running at all times. If the focusing points of interest are spread across the whole frame, then there is no time allocated neither for recharge nor for auto focus actuator movement. Whenever the auto focus movement is taking place, some region of the image will have invalid sharpness values. In this case, the low-noise mode cannot be used unless the information on the focusing area if interest is taken into account. If the focusing target area is confined to a small number of rows, as illustrated in figure 6, then only the acquisition of these rows is critical from a noise point of view, and from a focus point of view. The filled horizontal lines in figure 6, indicates when the charge pump is active. The Low-Noise registers are in this example set to enable the charge pump to be running (Low-Noise mode OFF) during the Auto Focus (AF) actuator movement periods.

Here the noise-free acquisition (or noise reduced acquisition) of the focus target is ensured by setting the LN_START and LN_END registers so that for example a TLens™ 10 voltage transitions occur outside of the exposure and sampling of the area of interest, indicated in figure 6 as AF actuator movement.

In many display devices in cameras, the Graphical User Interface has a facility by which the user selects a focus target. For example, by touching a touch sensitive display screen on a selected focus point like a face, tree, animal etc. This focus target will cover a certain number of rows, and the start and end row selected by the user is read by the application. Thus the application will pass the start row and end row of the focus target to the ASIC driver software, which will calculate the corresponding values of LN_START and LN_END registers for example, so that the charge pump is switched off while the focus target rows are exposed and sampled.

### Example 3: an example of a low-noise mode with reference to figure 7.

This example of embodiment allows AF actuator movement of a lens and reservoir capacitor recharge to be enabled during the period between two frames. This applies for example to fixed frame rate video. In this period it is also common to have a blanking period of the image sensor circuitry. The filled horizontal lines in figure 7, indicates the low-noise enabled period.

Generally, timeslots may be defined by timer registers and/or events in the connected apparatus. Timer registers may also be controlled by a status signal. It is also within the scope of the present invention that a status signal also may be generated by the charge pump electronics itself. For example when a target voltage level has been reached, a signal is issued. Therefore, the electronic noise reduction system according to the present invention may comprise a plurality of timer registers defining a plurality of respective time slots in a series of interconnected respective timeslots, wherein one timer register in the series of timer registers starts a next timer register in the series of timer registers when this one timer register terminates. Further, at least one of the pluralities of respective timeslots is controlled by a status of the apparatus or charge pump circuitry, wherein a start of a timeslot is triggered when a preceding timer register associated with the preceding time slot has terminated and the status of the activity indicates a permissible start of a next timeslot. Further, a status signal from the apparatus or charge pump circuitry itself may terminate a running timer register in the series of timer registers. For example, a voltage monitoring of the output from the charge pump may trigger a stop of a low-noise mode (terminating a timer register) if the output voltage has dropped for example 10% below the target value. However, it is further within the scope of the present invention to also be able to stop or halt a noise sensitive operation in the attached apparatus thereby avoiding the problems with the noise and let the noise sensitive operation continue for example when the output voltage from the charge pump again is on a target value level.

It is further within the scope of the present invention to utilize image analysis techniques when deciding to enable or disable a charge pump activity. For example, an Image Signal Processor 21 may have routines providing an estimate of a noise level in a preview picture taken with the charge pump running, and based on the estimated noise level, a decision about leaving the charge pump running, or turn it off can be made. In an example of embodiment of the noise reduction system according to the present invention, controlling bits like Low-Noise FORCE_ON and Low-Noise FORCE_OFF as discussed above may be used. It is further possible for the routine providing the estimate of the noise level to estimate the time an image acquisition may use and this information can be used to set corresponding timer registers. It is also possible for such a routine to compare the time that is used for the image acquisition with a possible degrade of the actuator voltage levels provided for by the charge pump and then decide if the time spent will not degrade the voltage level below a predefined threshold, for example a 5% limit. If this is a detected situation, the noise reduction system may give a feed back to the user of the camera, for example change the exposure time of the camera.

According to an example of a method according to the present for providing noise reduction in a power source using a charge pump supplying power to a connected apparatus may comprise steps like:
a) identifying time related sequences in operations performed in the connected apparatus that are sensitive to electrical noise present in the apparatus,
b) identifying time related sequences in operations performed in the connected apparatus that are not sensitive to electrical noise present in the apparatus,
c) use the time related information identified in a) to identify time slots during operation of the connected apparatus wherein the charge pump could be turned off,
d) use the time related information identified in b) to identify time slots during operations of the connected apparatus wherein the charge pump may be turned on,

In order to secure proper operation of the charge pump, the method may further comprise the steps:
e) identifying a maximum allowed time length the charge pump may be turned off during operations of the connected apparatus,
f) if the charge pump is turned off and the time length associated with this action exceed the identified maximum time length, start the charge pump.

It is further within the scope of the method according to the present invention to let identifications of events related to an activity being performed in the connected apparatus to define a start and stop condition of respective time slots. It is further within the scope of the method according to the present invention to see timer register associated with each respective time slot. Further, any combinations of event and/or timer registers are within the scope of the present invention.

It is also important to note that a time slot length can be user defined. For example, if the connected apparatus is a camera, poor light conditions could be overcome by allowing a longer integration time in an image sensor. The exposure time may be regulated via a user interface in the camera.

It is also within the scope of the present invention that a process running in the apparatus can define, according to an algorithm being executed in the process, how long at least one time slot should be, and such a value can be uploaded into a corresponding timer register being associated with this at least one specific time slot. For example, a light condition measurement in a camera can calculate an optimal integration time for the image sensor. A process can also halt assigned noise reduction time slots if the apparatus is used in a manner requiring optimal power charging. For example, a camera used in a medical endoscopy application may require that an OIS system operates continuously providing stable images when the endoscopy probe is being entered into the patient until a location is identified requiring an optimal image quality, then a low-noise sequence is started in the camera.

## Claims

1. An electronic noise reduction system comprising a charge pump voltage source providing power for a connected apparatus, **characterized in that** the system respectively turns on or off the charge pump in respective time slots defined by a status of an activity progressing in the apparatus, wherein the charge pump is turned on in a timeslot related to an activity in the apparatus that is not noise sensitive, while the charge pump is turned off in a timeslot related to an activity that is noise sensitive.

2. The electronic noise reduction system according to claim 1, a start and a respective stop of a timeslot is activated by a detection of a specific event in the connected apparatus.

3. The electronic noise reduction system according to claim 1, wherein a timeslot is defined by a value initialized in a timer register.

4. The electronic noise reduction system according to claim 3, wherein a plurality of timer registers define a plurality of respective time slots in a series of interconnected respective timeslots, wherein one timer register in the series of timer registers starts a next timer register in the series of timer registers when this one timer register terminates.

5. The electronic noise reduction system according to claim 4, wherein at least one of the plurality of respective timeslots is controlled by a status of the apparatus, wherein a start of a timeslot is triggered when a preceding timer register associated with the preceding time slot has terminated and the status of the activity indicates a permissible start of a next timeslot.

6. The electronic noise reduction system according to claim 4, wherein an activity status in the apparatus terminates a running timer register in the series of timer registers.

7. The electronic noise reduction system according to claim 1, wherein a status in the apparatus is related to monitoring the voltage power source when the charge pump is off, and if the monitoring of the voltage source indicates a drop in voltage level below a defined voltage level, the charge pump is started overriding the activity status in the apparatus.

8. The electronic noise reduction system according to claim 7, wherein the monitoring of the voltage source level is used by the apparatus to enable noise sensitive activity or respectively halt noise sensitive activity dependent on the activity of the charge pump.

9. The electronic noise reduction system according to claim 1, a length of a respective timeslot is user definable.

10. The electronic noise reduction system according to claim 1, the apparatus comprise an auto focus device.

11. The electronic noise reduction system according to claim 1, the apparatus comprises an optical image stabilization system.

12. The electronic noise reduction system according to claim 1, the apparatus is electrically equivalent to at least one capacitive load for the charge pump..

13. The electronic noise reduction system according to any preceding claim, the electronic noise reduction system is an integral part of an Application Specific Integrated Circuit (ASIC).

14. The electronic noise reduction system according to claim 13, the ASIC is used in a Micro Electro Mechanical System (MEMS).

15. A method for noise reduction in a power source using a charge pump supplying power to a connected apparatus, comprising:
a) identifying time related sequences in operations performed in the connected apparatus that are sensitive to electrical noise present in the apparatus,
b) identifying time related sequences in operations performed in the connected apparatus that are not sensitive to electrical noise present in the apparatus.
c) use the time related information identified in a) to identify time slots during operation of the connected apparatus wherein the charge pump could be turned off.
d) use the time related information identified in b) to identify time slots during operations of the connected apparatus wherein the charge pump may be turned on.

16. The method according to claim 15, further comprising:
e) identifying a maximum allowed time length the charge pump may be turned off during operations of the connected apparatus,
f) if the charge pump is turned off and the time length associated with this action exceed the identified maximum time length, start the charge pump.

17. The method according claim 15 or 16, wherein respective identified time slots are event driven.

18. The method according to claim 15 or 16, wherein respective identified time slots are defined by user selectable values in respective timer registers.
